# EUROPÄISCHE PATENTSCHRIFT

(11) **EP 0 706 462 B1**
(45) Veröffentlichungstag und Bekanntmachung des Hinweises auf die Patenterteilung: **27.12.1996**
(21) Anmeldenummer: 94920380.6
(22) Anmeldetag: 28.06.1994
(51) Int. Cl.: B60K 6/04

(54) **ANTRIEBSANORDNUNG FÜR EIN HYBRIDFAHRZEUG**
DRIVE ARRANGEMENT FOR A HYBRID VEHICLE
SYSTEME D'ENTRAINEMENT POUR VEHICULE HYBRIDE

(30) Priorität: 09.07.1993 DE 4323601
(43) Veröffentlichungstag der Anmeldung: 17.04.1996
(73) Patentinhaber: FICHTEL & SACHS AG, D-97424 Schweinfurt (DE)
(72) Erfinder: LUTZ, Dieter, D-97422 Schweinfurt (DE); BAUCH-PANETZKY, Dieter, D-97422 Schweinfurt (DE); THIELER, Wolfgang, D-97437 Hassfurt (DE)
(74) Vertreter: Meissner, Peter E., Dipl.-Ing.
(86) Internationale Anmeldenummer: DE9400774
(87) Internationale Veröffentlichungsnummer: WO9501884

(56) Entgegenhaltungen:
- EP-A- 0 528 412
- DE-A- 3 230 121
- DE-A- 3 243 514
- GB-B- 993 185
- WO91/08919

## Beschreibung

Die Erfindung betrifft eine Antriebsanordnung für ein Hybridfahrzeug gemäß dem Oberbegriff des Patentanspruchs 1.

Aus der DE 37 37 192 A1 ist ein Hybridantrieb für ein Kraftfahrzeug bekannt, das für seinen Antrieb einen Verbrennungsmotor und einen als Asynchronmaschine ausgebildeten Elektromotor aufweist. Der Rotor des Elektromotors ist über eine erste Trennkupplung (Trockenkupplung) mit der Kurbelwelle des Verbrennungsmotors und über eine zweite Trennkupplung mit der Eingangswelle des Getriebes verbindbar. Der Verbrennungsmotor besitzt kein eigenes Schwungrad. Statt dessen ist der Rotor des Elektromotors als Schwungmasse für den Verbrennungsmotor nutzbar, wenn die erste Kupplung geschlossen ist. Der Rotor des Elektromotors, der innerhalb des Stators angeordnet ist, besitzt einen Nabenkärper, der an der dem Getriebe zugewandten Seite angeordnet und auf der Getriebeeingangswelle gelagert ist. Er ist sehr massiv ausgeführt und stellt somit einen großen Teil der Schwungmasse dar. Der Nabenkörper bildet das Widerlager für die Kupplungsscheibe der zweiten Trennkupplung, die die Reibschlußverbindung zwischen Rotor und Getriebeeingangswelle herstellt. Die erste Trennkupplung ist auf der dem Verbrennungsmotor zugewandten Stirnseite des Elektromotors angeordnet. Ihre Kupplungsscheibe ist drehfest mit der Kurbelwelle verbunden. Zur Herstellung der Reibschlußverbindung im eingekuppelten Zustand weist sie ein eigenes, ebenfalls massiv ausgeführtes ringförmiges Widerlager auf, das mit dem Rotor starr verbunden ist. Beide Trennkupplungen sind also auf derselben Seite des Nabenkörpers nebeneinander angeordnet. Die Leistung des Elektromotors, der bei rein verbrennungsmotorischem Antrieb des Hybridfahrzeugs (beide Trennkupplungen geschlossen) als Generator arbeitet und die Fahrzeugbatterie und sonstige elektrische Verbraucher speist, beträgt nur einen relativen kleinen Bruchteil der Verbrennungsmotorleistung und liegt z.B. bei 7 kW. Aus diesem Grunde sind die Fahrleistungen im reinen Elektrobetrieb (erste Trennkupplung zwischen Rotor und Kurbelwelle geöffnet, zweite Trennkupplung geschlossen) entsprechend bescheiden. Der Elektromotor soll bei diesem Hybridfahrzeug auch die Funktion des Anlassers für den Verbrennungsmotor übernehmen können. Wegen der geringen Leistung und des relativ niedrigen erzeugbaren Drehmoments ist aber ein direktes Anlassen aus dem Stillstand des Elektromotors heraus nicht möglich. Daher ist vorgesehen, daß der Elektromotor zunächst bei geöffneten Trennkupplungen auf eine relativ hohe Drehzahl gebracht wird, so daß in der sich drehenden Schwungmasse des Rotors bereits eine beträchtliche Energiemenge gespeichert ist. Erst dann wird die erste Trennkupplung zwischen Rotor und Kurbelwelle ruckartig eingeschaltet, so daß der Verbrennungsmotor bis über die Anlaßdrehzahl hochgerissen wird und dann selbsttätig weiterlaufen kann. Außer dem rein elektromotorischen und dem rein verbrennungsmotorischen Antrieb kann auch ein gleichzeitiger Antrieb über beide Motoren erfolgen, wenn beide Trennkupplungen geschlossen sind und die elektrische Maschine nicht als Generator sondern als elektrischer Antriebsmotor betrieben wird.

Ein Nachteil dieser bekannten Antriebsanordnung liegt in dem Umstand, daß zwei separate Trennkupplungen mit den zugehörigen Betätigungsvorrichtungen verwendet werden müssen, die nicht nur entsprechenden Bauaufwand (Herstellkosten) mit sich bringen, sondern auch entsprechenden Platzbedarf insbesondere in axialer Richtung erfordern.

Aufgabe der Erfindung ist es daher, eine vereinfachte und möglichst kompakte Antriebsanordnung vorzuschlagen, die dennoch die vorgenannten drei unterschiedlichen Betriebsarten eines Hybridantriebs (verbrennungsmotorisch, elektromotorisch, kombiniert) und ein sicheres Starten des Verbrennungsmotors erlaubt.

Gelöst wird diese Aufgabe bei einer gattungsgemäßen Antriebsanordnung mit den kennzeichnenden Merkmalen des Patentanspruchs 1. Vorteilhafte Weiterbildungen der Erfindung sind in den Unteransprüchen 2 bis 17 angegeben.

Die Erfindung geht aus von der bekannten Antriebsanordnung gemäß DE 37 37 192 A1. Besonders bevorzugt wird eine Ausführung der Erfindung, bei der die elektrische Maschine als Außenläufermaschine, insbesondere als elektronisch kommutierte Synchronmaschine mit einem mit einer Vielzahl abwechselnd gepolter Permanentmagnete (insbesondere aus FeNdB- oder SmCo-Legierungen oder anderen Legierungen mit möglichst hoher Magnetfeldstärke) ausgebildet ist. Diese Bauweise ermöglicht wesentlich höhere Drehmomente, so daß ein sicheres Anlassen des Verbrennungsmotors aus dem Stillstand der elektrischen Maschine heraus möglich ist. Ihr Stator ist mit dem Gehäuse des Verbrennungsmotors und/oder des zugehörigen Schaltgetriebes fest verbunden, während der Rotor drehmomentübertragend (z.B. ständig drehfest) an die Abtriebswelle der Antriebseinheit (Getriebeeingangswelle) gekoppelt ist. Unter "drehfest" wird in diesem Zusammenhang nicht zwangsläufig eine starre Verbindung verstanden, sondern es ist zulässig, daß eine begrenzte Veränderung der relativen Winkelstellung zwischen dem Rotor und der Abtriebswelle stattfindet, wie sie etwa durch den Einbau von Torsionsdämpfern ermöglicht wird. Es können auch Überlastungsschutzeinrichtungen wie etwa eine Rutschkupplung vorgesehen sein. Als weiteres wesentliches Merkmal sieht die Erfindung die Verwendung von nur noch einer einzigen Kupplung (Schalt- und Trennkupplung) vor, die die Verbindung zwischen Verbrennungsmotorkurbelwelle und Abtriebswelle der Antriebsanordnung schaltbar macht. Die Abtriebswelle kann beispielsweise Teil eines automatisierten Getriebes oder eines Drehmomentwandlers sein. Vorzugsweise stellt sie jedoch die Eingangswelle eines Schaltgetriebes dar. In diesem Zusammenhang bietet die Erfindung den Vorteil, daß die Antriebsanordnung im Regelfall ohne weiteres innerhalb des von einer herkömmlichen Getriebeglocke vorgegebenen Bauraums untergebracht werden kann, zumindest aber diesen Bauraum nicht wesentlich überschreitet.

Anhand der in den Figuren dargestellten Ausführungsbeispiele wird die Erfindung nachfolgend näher erläutert. Es zeigen:
- Figur 1: das Schema einer erfindungsgemäßen Antriebsanordnung mit Einscheibentrockenkupplung,
- Figur 2: das Schema einer abgewandelten Antriebsanordnung mit Zweischeibentrockenkupplung,
- Figur 3: das Schema der Signalauswertung bei einem Schaltvorgang.

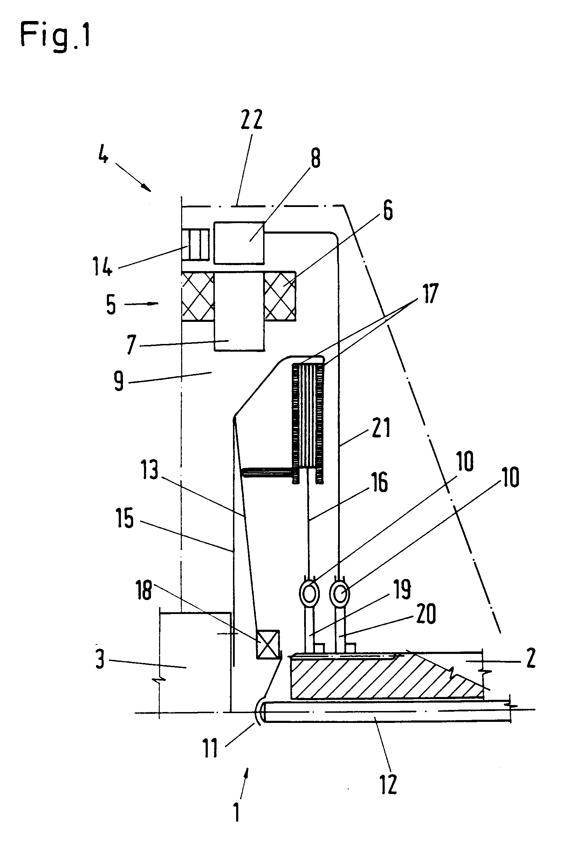

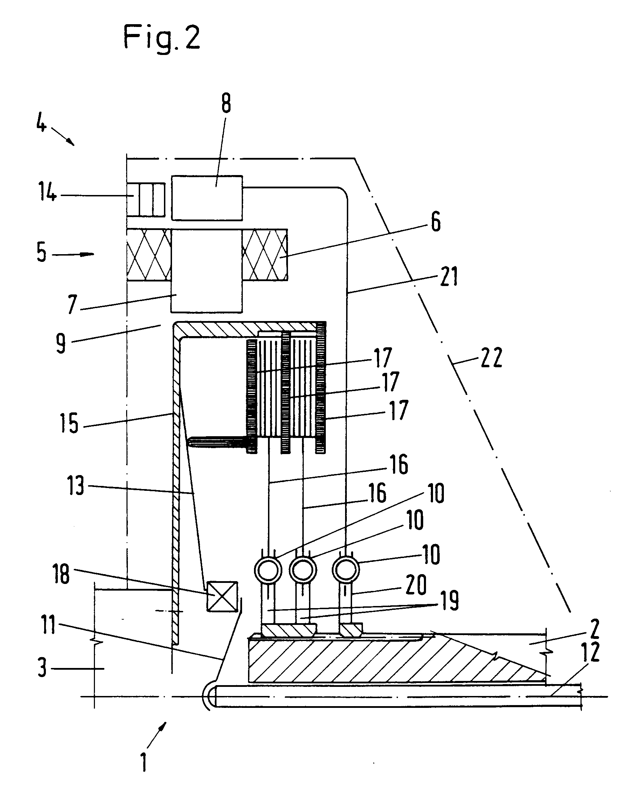

Figur 1 stellt einen axialen Längsschnitt durch eine erfindungsgemäße Antriebsanordnung dar, die zwischen der Kurbelwelle 3 eines nicht näher dargestellten Verbrennungsmotors und einer Abtriebswelle 2 angeordnet ist, die im vorliegenden Fall die Eingangswelle eines nicht dargestellten Schaltgetriebes ist. Die gesamte Anordnung findet Platz innerhalb der durch strichpunktierte Linien angedeuteten Getriebeglocke 22. Eine als Einscheibentrockenkupplung ausgebildete Trennkupplung 1 stellt eine schaltbare Drehmomentübertragungsverbindung zwischen der Kurbelwelle 3 und der Getriebewelle 2 her. Hierzu ist das Kupplungsteil 15 fest mit der Kurbelwelle 3 verbunden. Die Kupplungsscheibe 16 ist über den Nabenkörper 19 drehfest mit der Getriebewelle 2 verbunden. Diese Verbindung ist jedoch nicht völlig starr, da zwischen der Kupplungsnabe 19 und der Kupplungsscheibe 16 in an sich bekannter Weise Torsionsdämpfer 10 angeordnet sind. Im unbetätigten Zustand der Kupplung 1 drückt die Membranfeder 13 eine Druckplatte 17 gegen eine zweite Druckplatte 17, die als Widerlager mit dem Kupplungsteil 15 fest verbunden ist. Da zwischen den beiden Druckplatten 17 die beidseitig mit Reibbelägen ausgestattete Kupplungsscheibe 16 eingeklemmt wird, stellt sich auf diese weise die Reibschlußverbindung zur Drehmomentübertragung ein. Zur Aufhebung dieser Reibschlußverbindung wird der durch die Abtriebswelle 2 geführte Ausrückstößel 12 nach links geschoben, so daß über den tellerförmig ausgebildeten Ausrücker 11 und das Ausrücklager 18 der Federkraft der Membranfeder 13 entgegengewirkt wird. Die Betätigung der Trennkupplung 1 kann rein mechanisch sein, wird jedoch vorzugsweise in automatisierter Form (z.B. hydraulisch, pneumatisch oder elektromechanisch) ausgeführt. Ein entsprechend betätigter Ausrücker würde zweckmäßig zwischen Verbrennungsmotor und Getriebe zentral angeordnet werden. Anstelle einer Einscheibentrockenkupplung kann, wie Figur 2 (funktionsgleiche Teile sind wie in Figur 1 bezeichnet) zeigt, zur Übertragung wesentlich größerer Drehmomente vorteilhaft auch z.B. eine Zweischeibentrockenkupplung oder eine sonstige Mehrscheibentrockenkupplung als Trenn- und Schaltkupplung 1 eingesetzt werden. Es ist auch denkbar, andersartige Kupplungssysteme wie etwa eine Magnetpulverkupplung zur Verbindung von Kurbelwelle 3 und Abtriebswelle 2 vorzusehen, wenngleich eine Trockenkupplung in Zusammenhang mit dem Schalten eines Schaltgetriebes vorzuziehen ist.

Die elektrische Maschine 4 weist einen vorzugsweise mit Permanentmagneten hoher Feldstärke ausgestatteten Rotor 8 als Außenläufer und einen konzentrisch innenliegenden Stator 5 auf. Der Stator 5 dieser als Synchronmaschine mit vorzugsweise elektronischer Kommutierung ausgebildeten wahlweise im Motor- oder Generatorbetrieb betreibbaren elektrischen Maschine 4 ist an dem nicht näher dargestellten Verbrennungsmotor befestigt und besteht aus den Statorwicklungen 6 und den Statorblechpaketen 7. Der Stator 5 weist eine durchgehende axiale, im wesentlichen zylindrische Ausnehmung 9 auf, die bis in die Nähe der Statorwicklungen 6 reicht. Die Trennkupplung 1 ist zumindest zu einem großen Teil, vorzugsweise vollständig, innerhalb des von dem ringförmigen Stator 5 umschlossenen Bauraums angeordnet, so daß eine kurze axiale Baulänge erreichbar ist. Gegenüber den schematischen Darstellungen in Figur 1 und Figur 2 kann die Kurbelwelle 3 noch deutlich verkürzt werden, so daß die Kupplung 1 wesentlich weiter nach links in den Stator 5 verschoben werden kann. Im vorliegenden Fall bestand hierzu keine Notwendigkeit, da die Antriebsanordnung auch so ohne weiteres in den vorgegebenen Bauraum der (serienmäßigen) Getriebeglocke 22 des Schaltgetriebes paßte. Der Rotor 8, der weniger bevorzugt auch z.B. als Kurzschlußläufer ausgeführt sein könnte, weist einen z.B. aus Blech tiefgezogenen oder aus Druckguß gefertigten Radkörper 21 auf, der wie bevorzugt über Torsionsdämpfer 10 und eine Rotornabe 20 drehfest mit der Abtriebswelle 2 verbunden ist. Der Rotor 8 dreht sich also zwangsläufig ständig mit der Abtriebswelle 2 mit, kann also nicht ausgekuppelt werden. Zwischen Rotor 8 und Abtriebswelle 2 sind Winkelverschiebungen in dem von den Torsionsdämpfern 10, die nicht notwendigerweise vorgesehen sein müssen, vorgegebenen engen Rahmen möglich. Die elektrischen Leitungsverbindungen zu den Statorwicklungen 6 sind ebensowenig dargestellt wie eine elektronische Steuerung mit einer Leistungselektronik zur Kommutierung des Stroms für die Statorwicklungen 6. Um die elektronische Steuerung jederzeit mit Informationen über die relative Winkelstellung zwischen den Permanentmagnetpolen des Rotors 8 und den Magnetpolen des Stators 5 zu versorgen, die für eine phasengerechte Stromsteuerung sowohl im Motor- als auch im Generatorbetrieb notwendig sind, ist vorzugsweise ein Resolversystem 14 vorgesehen, das hochgenaue Winkel- und daraus ableitbare Drehzahlinformationen liefert. Zweckmäßigerweise kann die elektronische Steuerung so eingerichtet werden, daß sie die elektrische Last bzw. das erzeugte Drehmoment der elektrischen Maschine 4 zeitgerecht so variiert, daß Drehmomentschwankungen an der Abtriebswelle 2 im Sinne einer Torsionsschwingungsdämpfung reduziert werden. In diesem Fall können die Torsionsdämpfer 10 ganz oder teilweise entfallen, ohne daß Komforteinbußen hingenommen werden müssen. Die elektronische Steuerung wird vorzugsweise dahingehend erweitert, daß sie die Betätigung der Kupplung initiiert, so daß diese automatisch vor sich geht. Dabei ist die Herstellung der Reibschlußverbindung so sanft vorzusehen, daß ein möglichst ruckfreies und verschleißarmes Einkuppeln gewährleistet ist. Da der Rotor 8 in ständiger Drehverbindung mit der Getriebeeingangswelle 2 des nicht dargestellten Schaltgetriebes steht und eine beträchtliche Schwungmasse darstellt (hohes GD²), empfiehlt es sich vielfach, die elektronische Steuerung darauf einzurichten, daß sie für einen Wechsel des Getriebegangs die erforderliche Synchrondrehzahl des Rotors durch eine entsprechende Drehzahländerung der elektrischen Maschine 4 einstellt. Zum Hochschalten des Getriebes (höherer Gang) wird die Getriebeeingangswelle 2 "elektrisch" abgebremst (Generatorbetrieb) und zum Herunterschalten (niedrigerer Gang) "elektrisch" beschleunigt (Motorbetrieb). Da die elektronische Steuerung nicht nur den bisherigen Getriebegang, sondern auch (z.B. über das Resolversystem 14) die bisherige Drehzahl der Getriebeeingangswelle 2 kennt, kann sie für die aktuelle Geschwindigkeit des Hybridfahrzeugs anhand des neugewählten Getriebegangs die neue Solldrehzahl der Getriebeeingangswelle 2 ermitteln und über die Leistungselektronik entsprechend einstellen. Sofern keine gesonderte Einrichtung zur Erkennung der Getriebegangwahl (z.B. Sensor am Schalthebel) zur Verfügung steht, kann durch die hochgenaue Erfassung der Rotordrehzahländerung während des Schaltvorgangs die Schaltrichtung von der elektronischen Steuerung erkannt werden, um dann durch elektromotorische Beschleunigung oder Abbremsung des Rotors den Synchronisierungsvorgang zur Entlastung der Synchronringe im Getriebe aktiv zu unterstützen. Während des Gangwechsels und der Einstellung der neuen Rotordrehzahl ist die Trennkupplung 1 selbstverständlich ganz oder zumindest teilweise (schleifende Kupplung) geöffnet. Um die Synchronisation auch im Falle einer sich während des Schaltvorgangs relativ stark ändernden Fahrzeuggeschwindigkeit (z.B. Schaltvorgang bei Bergfahrt) noch sicher durchführen zu können, können zusätzliche Drehwinkel- bzw. Drehzahlerfassungsmittel vorgesehen sein, die die aktuelle Drehzahl der Getriebeabtriebsvelle ermitteln. Da während des Schaltvorgangs ein wesentlicher Teil der Schwungmasse (Rotor) vom Verbrennungsmotor abgekuppelt ist, wirkt dann nur noch das mit der Kurbelwelle fest verbundene Kupplungsgehäuse als Schwungmasse. Die elektronische Steuerung überwacht daher die Drehzahl des Verbrennungsmotors und greift gegebenenfalls ein (z.B. Veränderung der Einspritzmenge oder des Drosselklappenwinkels), um ein Absinken der Drehzahl unter eine definierte Grenze (z.B. Leerlaufdrehzahl) zu verhindern.

Das Schalten im reinen Elektromotorbetrieb wird ebenfalls mit Unterstützung des Synchronisierungsvorgangs durch aktive Drehzahländerung der elektrischen Maschine vorgenommen. Um den Schaltwunsch des Fahrers für den Fall, daß kein Sensor für die Erfassung von Schalthebelsignalen vorhanden ist, zu erkennen, kann die elektronische Steuerung die Drehzahl bzw. die Drehzahländerung der elektrischen Maschine und/oder die jeweils vom Fahrer bewirkte Änderung der Fahrpedalstellung als Eingangsgröße nutzen und z.B. aufgrund des Wertes der ersten oder zweiten Ableitung entscheiden, daß ein Schaltvorgang einzuleiten ist. Dies gilt nicht nur für den elektrischen sondern auch für den verbrennungsmotorischen Fahrbetrieb.

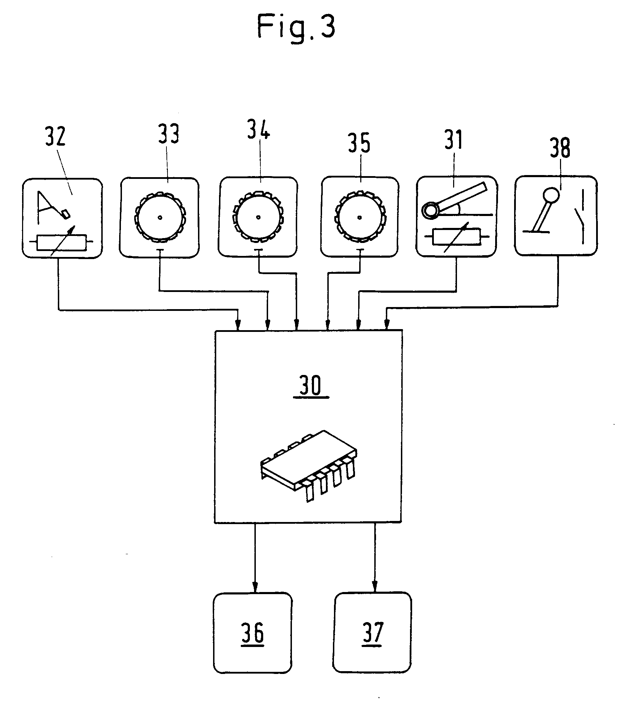

Die Signalauswertung für die Schaltvorgänge ist in Fig. 3 schematisch an einem Beispiel dargestellt. Die Steuerelektronik 30 erhält über geeignete Sensoren als Eingangssignale aktuelle Informationen über die Betätigung des Fahrpedals 31, des Bremspedals 32 und des Schalthebels 38 sowie Drehzahlinformationen der elektrischen Maschine 33, des Verbrennungsmotors 34 und der Getriebeeingangswelle 35. Die Auswertung der Signale führt im Verbrennungsmotorbetrieb zu folgenden Aktionen, die durch den Block 36 symbolisiert werden:
- Erkennen der Schaltabsicht
- Kupplung öffnen
- Drehmomententlastung des Getriebes durch aktive Drehzahlsteuerung der elektrischen Maschine (soweit erforderlich)
- Gang herausnehmen
- aktive Unterstützung des Synchronisierungsvorgangs durch die elektrische Maschine
- Gang einlegen
- Kupplung dosiert einrücken
- Verbrennungsmotor entsprechend Signal des Fahrpedals betreiben

Im reinen Elektromotorbetrieb laufen die durch den Block 37 symbolisierten Aktionen ab bei ständig geöffneter Kupplung:
- Erkennen der Schaltabsicht
- Drehmomententlastung des Getriebes durch aktive Drehzahlsteuerung der elektrischen Maschine
- Gang herausnehmen
- aktive Unterstützung des Synchronisierungsvorgangs durch die elektrische Maschine
- Gang einlegen
- elektrische Maschine entsprechend Signal des Fahrpedals betreiben

Das Starten des Verbrennungsmotors kann bei einer erfindungsgemäßen Antriebsanordnung auf unterschiedliche Weise bewerkstelligt werden. Wenn das Fahrzeug steht und sich das Schaltgetriebe in Nullstellung befindet, kann bei geschlossener Trennkupplung 1 aufgrund des erzeugbaren hohen Motordrehmoments der elektrischen Maschine 4 die Kurbelwelle 3 zusammen mit der Getriebeeingangswelle 2 schnell auf die Anlaßdrehzahl beschleunigt und der Verbrennungsmotor gezündet werden. Der Anlaßvorgang kann aber auch so ausgeführt werden, daß die Trennkupplung 1 zunächst geöffnet und das Hybridfahrzeug dann rein elektromotorisch auf eine geeignete Mindestgeschwindigkeit (z.B. 5 - 20 km/h) beschleunigt wird. Wenn diese Mindestgeschwindigkeit erreicht ist, wird die Trennkupplung 1 (z.B. automatisch durch die elektronische Steuerung) dosiert geschlossen, so daß der Verbrennungsmotor auf die Anlaßdrehzahl beschleunigt wird. Zweckmäßigerweise sieht die elektronische Steuerung vor, daß die Trennkupplung 1 während des Zündvorgangs vorübergehend ganz oder teilweise wieder geöffnet wird, um den Übergang des Verbrennungsmotors von der Schlepp- in die Antriebsphase abzudämpfen. Anschließend wird wieder automatisch dosiert eingekuppelt, so daß das Hybridfahrzeug mit Verbrennungsmotorantrieb läuft. Der Antrieb durch den Elektromotor 4 kann dann zurückgenommen werden und sogar in den Generatorbetrieb zwecks Ladung eines Akkumulators und/oder zur Versorgung sonstiger elektrischer Verbraucher umgekehrt werden. Der Elektromotorantrieb kann aber für begrenzte Zeit auch beibehalten werden, wenn (z.B. für einen Überholvorgang) eine über die Leistung des Verbrennungsmotors hinausgehende Antriebsleistung gewünscht wird (Booster-Betrieb). Das Anlassen des Verbrennungsmotors kann selbstverständlich auch jederzeit während des rein elektromotorischen Fahrbetriebs aus der gerade vorliegenden Fahrzeuggeschwindigkeit heraus erfolgen, indem in entsprechender Weise wie bei der zweiten Variante des Anlaßvorgangs verfahren wird. Zur Vermeidung einer ungewünschten Fahrzeugverzögerung kann die elektronische Steuerung eine vorübergehende Erhöhung der Antriebsleistung des Elektromotors 4 vorsehen. In allen Fällen kann, wie vorstehend bereits beschrieben wurde, die elektrische Maschine 4 über die elektronische Steuerung so betrieben werden, daß an der Abtriebswelle 2 eine Torsionsschwindungsdämpfung erzielt wird. Als Führungsgröße hierfür kann die hochgenau erfaßte Drehzahl der elektrischen Maschine und deren 1. und 2. Ableitung genutzt werden.

Wenn das Hybridfahrzeug abgebremst werden soll, arbeitet die elektrische Maschine 4 vorzugsweise auf Anweisung der elektronischen Steuerung als Generator und erzeugt unter Lieferung nutzbarer elektrischer Energie auf diese Weise ein Bremsmoment. Um z.B. während einer Schubbetriebsphase möglichst viel Energie in dieser Form zurückzugewinnen, kann je nach erforderlichem Bremsmoment (z.B. abhängig von der Weg/Zeit-abhängigen Betätigung eines Bremspedals: s, s', s'') eine vorübergehende Abkopplung des Verbrennungsmotors durch Lösen der Trennkupplung 1 erfolgen, so daß allein durch den Generatorbetrieb gebremst wird. Bei einem größeren erforderlichen Bremsmoment kann zusätzlich die Motorbremswirkung des Verbrennungsmotors genutzt werden, indem die Trennkupplung 1 geschlossen und die Treibstoffzufuhr zum Verbrennungsmotor unterbrochen wird. Für höchste Bremsleistungen schließlich wird die herkömmliche Reibbremse (z.B. Scheibenbremse) mitgenutzt.

Die erfindungsgemäße Antriebsanordnung hat bei voller Funktionsfähigkeit für alle Formen des Hybridantriebs den Vorteil einer weniger Bauteile erfordernden und somit geringere Herstellkosten verursachenden Lösung. Darüber hinaus ermöglicht sie eine deutlich kompaktere Bauweise insbesondere in axialer Richtung, zumal eine zweite Trennkupplung einschließlich der dafür sonst benötigten Betätigungsvorrichtungen vollständig entfällt. Der drehmomentstarke Außenläufer-Elektromotor hat insbesondere als Permanentmagnetmaschine eine vergleichsweise höhere Leistung (bessere Fahrleistung) und einen höheren Wirkungsgrad als die bisher verwendeten Innenläufer-Asynchronmaschinen und ermöglicht hierdurch eine größere Reichweite des Fahrzeugs.

## Patentansprüche

1. Antriebsanordnung für ein mit einem Verbrennungsmotor und einer elektrischen Maschine (4) ausgestattetes Hybridfahrzeug, das zumindest während begrenzter Zeitabschnitte wahlweise mit rein verbrennungsmotorischem Antrieb, mit rein elektromotorischem Antrieb oder gleichzeitig mit verbrennungs- und elektromotorischem Antrieb betreibbar ist, wobei der Verbrennungsmotor und der Elektromotor (4) auf eine gemeinsame, zu einem Schaltgetriebe führende Abtriebswelle (2) wirken und die Drehmomentübertragung zwischen der Kurbelwelle (3) des Verbrennungsmotors und der Abtriebswelle (2) kupplungstechnisch schaltbar ist,
dadurch gekennzeichnet,
daß der Stator (5) der elektrischen Maschine (4) an dem Gehäuse des Verbrennungsmotors und/oder des zugehörigen Schaltgetriebes befestigt ist,
daß der Rotor (8) der elektrischen Maschine (4) drehmomentübertragend mit der Abtriebswelle (2) verbunden ist und daß innerhalb der Antriebsanordnung nur eine einzige schaltbare Kupplung (1) (Schalt- und Trennkupplung) vorgesehen ist, daß der Stator eine durchgehende, bis in die Nähe der Statorwicklungen (6) reichende Ausnehmung (9), insbesondere eine axiale Ausnehmung aufweist und daß die Kupplung (1) ganz oder teilweise innerhalb der Ausnehmung (9) angeordnet ist.

2. Antriebsanordnung nach Anspruch 1,
dadurch gekennzeichnet,
daß die elektrische Maschine (4) als Außenläufermaschine ausgebildet ist.

3. Antriebsanordnung nach Anspruch 1 oder 2,
dadurch gekennzeichnet,
daß der Rotor (8) mit einer Vielzahl von Permanentmagneten bestückt ist und eine elektronische Steuerung zur Kommutierung des Stroms für die Wicklungen (6) des Stators (5) vorgesehen ist.

4. Antriebsanordnung nach einem der Ansprüche 1 bis 3,
dadurch gekennzeichnet,
daß die Kupplung (1) als Einscheibentrockenkupplung ausgebildet ist.

5. Antriebsanordnung nach einem der Ansprüche 1 bis 3,
dadurch gekennzeichnet,
daß die Kupplung (1) als Mehrscheibentrockenkupplung ausgebildet ist.

6. Antriebsanordnung nach einem der Ansprüche 1 bis 5,
dadurch gekennzeichnet,
daß mindestens die Kupplung (1) Torsionsschwingungsdämpfungselemente (10) und/oder Überlastungsschutzeinrichtungen, insbesondere eine Rutschkupplung aufweist.

7. Antriebsanordnung nach Anspruch 6,
dadurch gekennzeichnet,
daß die Verbindung des Rotors (8) mit der Abtriebswelle (2) Torsionsschwingungsdämpfungselemente (10) aufweist.

8. Antriebsanordnung nach einem der Ansprüche 5 bis 7,
dadurch gekennzeichnet,
daß zur Betätigung der Kupplung (1) ein durch die Abtriebswelle (2) geführter Ausrückstößel (12) vorgesehen ist.

9. Antriebsanordnung nach einem der Ansprüche 4 bis 7,
dadurch gekennzeichnet,
daß zur Betätigung der Kupplung (1) ein hydraulisch oder elektrisch betätigter Ausrücker verwendet wird, der zwischen dem Verbrennungsmotor und dem Getriebe zentral angeordnet ist.

10. Antriebsanordnung nach einem der Ansprüche 4 bis 9,
dadurch gekennzeichnet,
daß die Kupplung (1) in unbetätigtem Zustand durch den Druck einer Membranfeder (13) eingekuppelt ist.

11. Antriebsanordnung nach einem der Ansprüche 3 bis 10,
dadurch gekennzeichnet,
daß die elektronische Steuerung (30) auf eine automatisierte Betätigung der Kupplung (1) eingerichtet ist.

12. Antriebsanordnung nach einem der Ansprüche 3 bis 11,
dadurch gekennzeichnet,
daß die elektronische Steuerung (30) auf ein weitgehend ruckfreies und verschleißarmes Einkuppeln der Kupplung (1) eingerichtet ist.

13. Antriebsanordnung nach einem der Ansprüche 3 bis 12,
dadurch gekennzeichnet,
daß die elektrische Maschine (4) mit einem Resolversystem (14) ausgerüstet ist und daß die elektronische Steuerung (30) im Motor- und/oder Generatorbetrieb der elektrischen Maschine (4) den Stromfluß in den Statorwicklungen (6) derart beeinflußt, daß das von der elektrischen Maschine (4) abgegebene bzw. aufgenommene Drehmoment im Sinne einer Torsionsschwingungsdämpfung an der Abtriebswelle (2) wirkt.

14. Antriebsanordnung nach einem der Ansprüche 3 bis 13,
dadurch gekennzeichnet,
daß die Abtriebswelle (2) die Eingangswelle eines Schaltgetriebes bildet und daß die elektronische Steuerung (30) beim Schalten eine Drehzahlveränderung des Rotors (8) im Sinne einer Getriebesynchronisation vorsieht.

15. Antriebsanordnung nach Anspruch 14,
dadurch gekennzeichnet,
daß Mittel zur direkten oder indirekten Erfassung der Abtriebsdrehzahl des Schaltgetriebes vorgesehen sind.

16. Antriebsanordnung nach Anspruch 14,
dadurch gekennzeichnet,
daß die elektronische Steuerung (30) bei elektrischem und/oder verbrennungsmotorischem Fahrbetrieb zur Erkennung eines Schaltwunsches den zeitlichen Verlauf des Fahrpedalwegs und/oder den zeitlichen Verlauf der Drehzahl der elektrischen Maschine (4) als Eingangsgröße verwertet.

## Claims

1. A drive system for a hybrid vehicle equipped with an internal combustion engine and an electric motor (4), which vehicle at least during limited periods can be operated selectively with a purely internal-combustion-engine drive, with a purely electric motor drive or simultaneously with an internal-combustion-engine drive and electric motor drive, the internal combustion engine and the electric motor (4) acting on a common output shaft (2) which leads to a gearbox, and the transfer of torque between the crankshaft (3) of the internal combustion engine and the output shaft (2) can be shifted by coupling means,
characterised in that
the stator (5) of the electric motor (4) is attached to the housing of the internal combustion engine and/or the associated gearbox,
that the rotor (8) of the electric motor (4) is connected to the output shaft (2) for transferring torque, and
that only a single shiftable clutch (1) (shifting and separating clutch) is provided within the drive system, that the stator has a continuous recess (9), in particular an axial recess, extending into the vicinity of the stator windings (6) and that the clutch (1) is arranged in its entirety or in part within the recess (9).

2. A drive system according to Claim 1, characterised in that the electric motor (4) is designed as an external rotor motor.

3. A drive system according to Claim 1 or 2, characterised in that the rotor (8) is equipped with a plurality of permanent magnets and an electronic control means for commutating the current for the windings (6) of the stator (5) is provided.

4. A drive system according to one of Claims 1 to 3, characterised in that the clutch (1) is designed as a single-plate dry clutch.

5. A drive system according to one of Claims 1 to 3, characterised in that the clutch (1) is designed as a multiple-plate dry clutch.

6. A drive system according to one of Claims 1 to 5, characterised in that at least the clutch (1) has torsional-vibration-damping elements (10) and/or overload protection means, in particular a slip clutch.

7. A drive system according to Claim 6, characterised in that the connection of the rotor (8) to the output shaft (2) has torsional-vibration-damping elements (10).

8. A drive system according to one of Claims 5 to 7, characterised in that a disengaging tappet (12) guided by the output shaft (2) is provided for actuating the clutch (1).

9. A drive system according to one of claims 4 to 7, characterised in that a hydraulically or electrically actuated disengaging element is used for actuating the clutch (1), which disengaging element is arranged centrally between the internal combustion engine and the gearbox.

10. A drive system according to one of Claims 4 to 9, characterised in that the clutch (1) in the non-actuated state is engaged by the pressure of a diaphragm spring (13).

11. A drive system according to one of Claims 3 to 10, characterised in that the electronic control means (30) is equipped for automated actuation of the clutch (1).

12. A drive system according to one of Claims 3 to 11, characterised in that the electronic control means (30) is equipped for largely jerk-free and low-wear engaging of the clutch (1).

13. A drive system according to one of Claims 3 to 12, characterised in that the electric motor (4) is equipped with a resolver system (14) and that the electronic control means (30) in the motor and/or generator operation of the electric motor (4) influences the flow of current in the stator windings (6) such that the torque delivered or taken up by the electric motor (4) acts on the output shaft (2) in the manner of a torsional-vibration-damping means.

14. A drive system according to one of Claims 3 to 13, characterised in that the output shaft (2) forms the input shaft of a gearbox and that the electronic control means (30) upon shifting provides for a change in speed of the rotor (8) in the manner of a gear synchronisation.

15. A drive system according to Claim 14, characterised in that means for the direct or indirect detection of the output speed of the gearbox are provided.

16. A drive system according to Claim 14, characterised in that the electronic control means (30) in the case of electric and/or internal-combustion-engine operation in order to recognise a desired shift evaluates the course over time of the path of the accelerator pedal and/or the course over time of the speed of the electric motor (4) as input variable.

## Revendications

1. Dispositif d'entraînement pour un véhicule hybride équipé d'un moteur à combustion interne et d'un moteur électrique (4), qui peut être actionné, au moins pendant des intervalles de temps limités, au choix, par un entraînement pur à moteur à combustion interne, par un entraînement pur à moteur électrique ou simultanément par un entraînement à moteur à combustion interne et à moteur électrique, le moteur à combustion interne et le moteur électrique (4) agissant sur un arbre de sortie commun (2) menant à une boîte de vitesses et la transmission de couple pouvant être commutée, par embrayage, entre le vilebrequin (3) du moteur à combustion interne et l'arbre de sortie (2),
caractérisé en ce que le stator (5) du moteur électrique (4) est fixé au carter du moteur à combustion interne et/ou à la boîte de vitesses correspondante, en ce que le rotor (8) du moteur électrique (4) est relié, en transmettant le couple, à l'arbre de sortie (2), et en ce que, à l'intérieur du dispositif d'entraînement, il n'est prévu qu'un embrayage commutable unique (1) (embrayage de commutation et de séparation), en ce que le stator présente un évidement continu (9), en particulier un évidement axial, s'étendant jusqu'à proximité des enroulements (6) du stator, et en ce que l'embrayage (1) est agencé en totalité ou en partie à l'intérieur de l'évidement (9).

2. Dispositif d'entraînement selon la revendication 1,
caractérisé en ce que le moteur électrique (4) est réalisé en tant que moteur à rotor externe.

3. Dispositif d'entraînement selon la revendication 1 ou 2,
caractérisé en ce que le rotor (8) est équipé d'une pluralité d'aimants permanents, et une commande électronique est prévue pour commuter le courant pour les enroulements (6) du stator (5).

4. Dispositif d'entraînement selon une des revendications 1 à 3,
caractérisé en ce que l'embrayage (1) est réalisé en tant qu'embrayage sec monodisque.

5. Dispositif d'entraînement selon une des revendications 1 à 3,
caractérisé en ce que l'embrayage (1) est réalisé en tant qu'embrayage sec multidisque.

6. Dispositif d'entraînement selon une des revendications 1 à 5,
caractérisé en ce qu'au moins l'embrayage (1) présente des éléments d'amortissement de vibrations de torsion (10) et/ou des dispositifs de protection de surcharge, en particulier un accouplement à friction.

7. Dispositif d'entraînement selon la revendication 6,
caractérisé en ce que la liaison du rotor (8) à l'arbre de sortie (2) présente des éléments d'amortissement de vibrations de torsion.

8. Dispositif d'entraînement selon une des revendications 5 à 7,
caractérisé en ce que, pour actionner l'embrayage (1), il est prévu un coulisseau de débrayage (12) guidé à travers l'arbre de sortie (2).

9. Dispositif d'entraînement selon une des revendications 4 à 7,
caractérisé en ce que, pour actionner l'embrayage (1), il est utilisé un moyen de débrayage actionné hydrauliquement ou électriquement, qui est agencé de façon centrale entre le moteur à combustion interne et la boîte de vitesses.

10. Dispositif d'entraînement selon une des revendications 4 à 9,
caractérisé en ce que l'embrayage (1), dans l'état non-actionné, est découplé par la pression d'un ressort à membrane (13).

11. Dispositif d'entraînement selon une des revendications 3 à 10,
caractérisé en ce que la commande électronique (30) est prévue pour un actionnement automatisé de l'embrayage (1).

12. Dispositif d'entraînement selon une des revendications 3 à 11,
caractérisé en ce que la commande électronique (30) est prévue pour un embrayage largement sans à-coups et sans usure de l'embrayage (1).

13. Dispositif d'entraînement selon une des revendications 3 à 12,
caractérisé en ce que le moteur électrique (4) est équipé d'un système séparateur (14), et en ce que la commande électronique (30), en fonctionnement moteur et/ou en fonctionnement générateur du moteur électrique (4), influence le flux de courant dans les enroulements du stator (6) de sorte que le couple reçu ou fourni par le moteur électrique (4) agit dans le sens d'un amortissement des vibrations de torsion sur l'arbre de sortie (2).

14. Dispositif d'entraînement selon une des revendications 3 à 13,
caractérisé en ce que l'arbre de sortie (2) forme l'arbre d'entrée d'une boîte de vitesses, et en ce que la commande électronique (30), lors de la commutation, prévoit une modification de la vitesse de rotation du rotor (8) dans le sens d'une synchronisation de la boîte de vitesses.

15. Dispositif d'entraînement selon la revendication 14,
caractérisé en ce que des moyens pour détecter directement ou indirectement la vitesse de rotation de sortie de la boîte de vitesses sont prévus.

16. Dispositif d'entraînement selon la revendication 14,
caractérisé en ce que la commande électronique (30) en fonctionnement d'avance électrique et/ou entraînée par le moteur à combustion interne, pour reconnaître un souhait de commutation, exploite l'allure temporelle de la course de la pédale d'accélérateur et/ou l'allure temporelle de la vitesse de rotation du moteur électrique (4) comme valeur d'entrée.
